Europäisches Patentamt

(19) European Patent Office

Office européen des brevets

(11) Publication number: **0 051 425**
**A1**

(12) # EUROPEAN PATENT APPLICATION

(21) Application number: **81305072.1**

(22) Date of filing: **27.10.81**

(51) Int. Cl.³: **G 06 F 13/00**

(30) Priority: **29.10.80 US 201698**

(43) Date of publication of application:
**12.05.82 Bulletin 82/19**

(84) Designated Contracting States:
**DE FR GB**

(71) Applicant: **HONEYWELL INC.**
**Honeywell Plaza**
**Minneapolis Minnesota 55408(US)**

(72) Inventor: **Rose, Steven A.**
**8348 N. 50th Street**
**Glendale Arizona 85304(US)**

(72) Inventor: **Cherry, Robert G.**
**1502 W. Orchid Lane**
**Phoenix Arizona 85021(US)**

(72) Inventor: **Forrester, Edward H.**
**4232 W. Mountain View Road**
**Phoenix Arizona 85021(US)**

(74) Representative: **Harman, Michael Godfrey et al,**
**Honeywell Control Systems Ltd. Patent Department**
**Charles Square**
**Bracknell Berks RG12 1EB(GB)**

(54) Bus access and priority resolving circuit.

(57) A cumputer system has a bus, controlled by a CPU, which other units may want to access. Each such unit includes a bus access and priority resolving circuit. Gating circuit 14 is responsive to an IWANT signal indicating that the unit wants to access the bus, a no bus grant signal (BSGNT = 0), and a no bus request signal (BSREQ = 1), and the set state of a bus request flip-flop 24 to reset that flip-flop and thereby generate a bus request signal. The resetting of flip-flop 24 sets (via further gating means 112) an assert priority flip-flop 26, which enables priority logic 31′ which resolves priority contentions with other units via a priority resolution bus 12. A bus grant signal (BSGNT = 1) from the CPU is combined with the priority logic output and the state of flip-flop 26, by logic circuitry 134, 176, 178, to generate an ISMNE signal (if the unit wins the priority contest) to grant the unit access to the bus.

FIG.3

# BUS ACCESS & PRIORITY RESOLVING CIRCUIT

The present invention relates to a computer control system, and more particularly to improved means for accomplishing a rapid resolution of priority determination among several contenders for a communication bus.

In computer control systems, and particularly systems wherein industrial processors are controlled by a digital computer, the system usually includes a basic computer or processor unit and a number of peripheral or subordindate units. The peripheral units may include a plurality of process control stations for directly controlling a phase of the industrial process and/or responsive to measured process variables, recorders, other memory devices, and other data manipulative structures. These devices are interconnected with the basic computer by way of a common communication bus.

While the bus is usually under the control of the central processor unit, from time to time the other units connected to that bus may require direct access thereto. In order to avoid confusion should several devices require access to the bus at substantially the same time, means must be provided for controlling the access to the bus in accordance with the predetermined arrangement. Numerous schemes have been provided for affecting such control, such as that of U.S. Patent 3,983,540, wherein each of the contending units is provided with a pre-set priority identification code and contention for the access to the bus is determined in accordance with that established priority.

More specifically, this known technique provides a bus access and priority resolving circuit for a computer system unit which may contend with other such units for access to a bus controlled by a CPU, comprising:

a bus request flip-flop which generates a bus request signal on the bus when reset;

gating circuitry responsive to a combination of conditions, including a signal indicating that the unit wants to access

- 2 -

the bus and the absence of a bus request, to reset the bus request flip-flop;

priority logic which resolves priority contentions with other units;

an assert priority flip-flop which is set with the resetting of the bus request flip-flop to enable the priority logic; and

logic circuitry responsive to the priority logic and a bus grant signal from the CPU to generate a signal indicating that the unit is granted access to the bus.

We have found that this system has potential ambiguities which could lead to malfunction and confusion in the accessing of the bus. More specifically, the gating circuitry is responsive to the absence of a bus request signal, and if another unit should attempt to access the bus and issue a bus request signal almost simultaneously with the signal indicating that the unit which includes the gating circuitry wants to access the bus, the gating circuitry could produce a merely momentary output, resulting in the bus request flip-flop being reset but the assert priority flip-flop not being set, or vice versa.

The main object of the present invention is to overcome this disadvantage. Accordingly the present invention provides a system as just set out, characterized by further gating means responsive to the resetting of the bus request flip-flop to set the assert priority flip-flop.

The known system also suffers from a further disadvantage. In the known system, the assert priority flip-flop is reset by the bus signal ending. In the burst mode, in which the unit sends a sequence of bytes or words, the signal indicating that the unit wants access to the bus momentarily disappears after each byte or word, as does the bus grant signal, and these signal changes can occur with a timing which results in a failure to set the assert priority flip-flop properly. The present invention also provides, in its preferred form, means for overcoming this disadvantage.

A computer system in which the present invention is embodied will now be described, by way of example, with reference to the drawings, in which:

Figure 1 is a block diagram of the computer system;

Figure 2 shows the known bus access and priority resolving circuit;

Figure 3 shows the bus access and priority resolving circuit of the present system;

Figure 4 shows the priority logic of the present system; and

Figure 5 shows a detail of the priority logic of the known circuit.

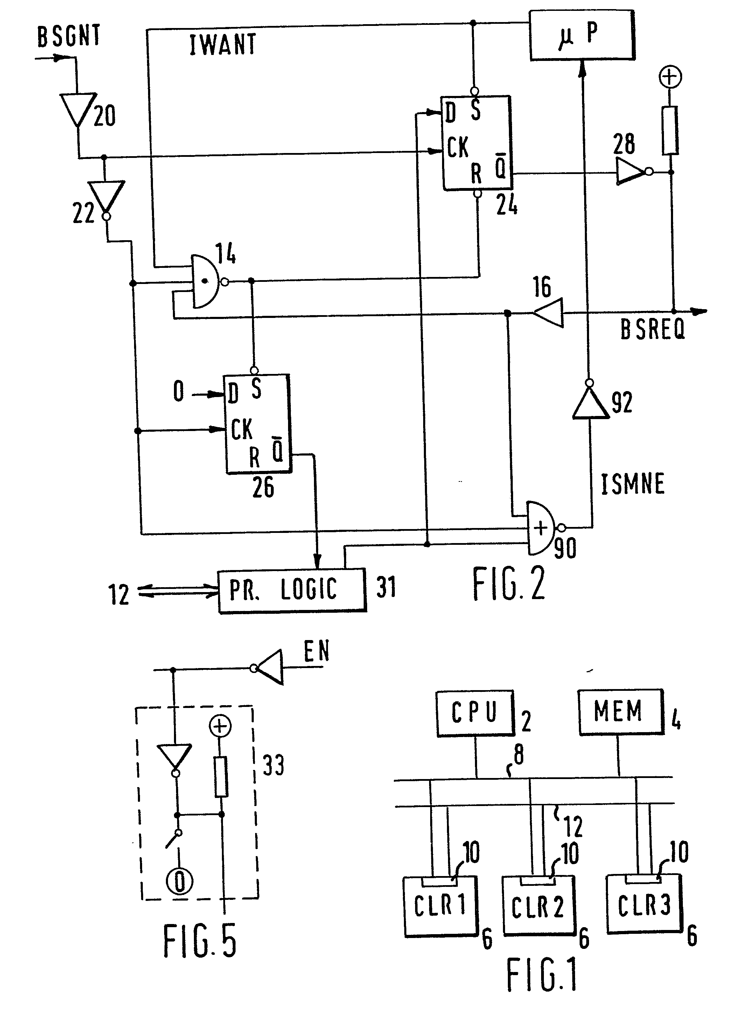

Figure 1 shows a computer system comprising a CPU 2, a main memory 4, and several peripheral units 6 all coupled to a common bus 8, which includes data, address, and control lines. The CPU exercises primary control over the system but much of the actual control function is affected by the peripheral units, each of which may include a microprocessor system of its own. The system is thus a distributed control system. In this system it is frequently required that the peripheral units acquire direct access to the communication bus, to communicate either with the main memory or with each other. There must therefore be means for determining the priority of access to that bus among the several contenders for such access. Hence each of the peripheral units or subordinate controllers 6 includes access contention logic circuit 10.

Under ordinary circumstances, the CPU 2 exercises direct control over the traffic on the communication bus 8. When, however, one or more of the subordinate controllers 6 requires access to the bus 8, a request for access signal is generated by the subordinate controllers affected and transmitted by the bus to the CPU 2. The CPU in turn finishes the business it has at hand on the bus 8 then issues an access grant signal on the bus to the requesting controllers. Between the time of the bus request signal and the access grant signal, the several requesting controllers use a priority bus 12 to contend among themselves, based upon the locally established priority code, which of them shall have first access to the bsu. Then when the bus access grant signal is received, that subordinate controller which was determined to have priority will be granted access to the bus. At the end of its transmission it then yields access to the bus and turns it over either to the CPU or the next in order of priority subordinate controller.

Figure 2 shows a known access contention circuit. Each of the subordinate controllers or peripheral units 6 includes its own microprocessor, and when a peripheral unit wants to gain access to the bus 8, its microprocessor issues a bus access wanted signal IWANT at 1. The peripheral unit thereupon issues a bus request signal BSREQ at 0 on a bus request line forming one of the control lines of bus 8. This bus request line is biased to 1 by a resistor to a positive supply, so that a 0 on it is a definite indication of a bus request from one or more of the peripheral units. The CPU 2 detects a 0 bus request signal, and in due course issues a bus grant signal BSGNT at 1 on a bus grant control line also in the bus 8. The access contention logic receives the bus grant signal.

At the same time, if the peripheral device is requesting access to the bus 8, it enables a priority logic unit 31 which is coupled to the priority bus 12. If more than one device is requesting access to the bus, the contention is resolved by the priority logic units 31 in the various peripheral units, and the unit with the highest priority wins and its priority logic unit 31 generates an output signal. The access contention logic responds to this output signal from its priority logic unit and the bus grant signal to generate a signal ISMNE, indicating that bus access has been granted and belongs to the unit, and passes this signal to the microprocessor.

The access contention logic comprises a bus request flip-flop 24, an assert priority flip-flop 26, the priority logic 31, and various logic gates. Flip-flop 24 is set and flip-flop 26 is reset when the unit is quiescent.

When the microprocessor of the peripheral unit wants access to the bus 8 and sets signal IWANT to 1, that signal is fed to a NAND gate 14. If no bus grant signal is currently issued by the CPU 2, signal BSGNT is 0, and this is passed through buffer amplifier 20 and inverter 22 to gate 14. Also, if there is currently no bus request signal, signal BSREQ is 1, and this is passed through buffer amplifier 16 to gate 14. Hence gate 14, which normally produces a 1, produces a 0 provided all 3 conditions are satisfied, that there is no bus grant signal, no bus request, and the unit wants access.

Gate 14 feeds the reset input of the bus request flip-flop 24, and the 0 from gate 14 resets this flip-flop. Its $\bar{Q}$ output therefore goes to 1, and this passes through inverter 28 to force signal BSREQ to 0, signalling to the CPU 2 that there is a bus request. Gate 14 also feeds the set input of the assert priority flip-flop 26, setting it. Its $\bar{Q}$ output therefore goes to 0, and this 0 is fed to the priority logic unit 31, enabling it.

In due course, the CPU 2 issues a bus grant signal BSGNT at 1. This signal is inverted by inverter 22 and fed to a NOR gate 90. Assuming that the unit shown had the highest priority, the priority logic 31 will have won the priority contest and have produced a 0. The NOR gate 90 will therefore have 0's on all 3 inputs: a 0 from inverter 22, a 0 from priority logic 31, and a 0 from signal BSREQ via buffer amplifier 16. Gate 90 will therefore produce a 1 signal, signal ISMNE, which is passed to the microprocessor via an inverter 92 to tell it that its bus request has been granted.

If the peripheral unit loses the priority contest, then its priority logic unit 31 produces a 1 output, holding the signal ISMNE at 0.

If the unit gained access to the bus, when it has finished the IWANT signal goes back to 0, so setting flip-flop 24. This results in the BSREQ signal going to 1, and the CPU 2 detects this and changes the BSGNT signal to 0. This results in the output of inverter 22 going to 1, clocking flip-flop 26 which has a 0 fed to its data input and is therefore reset.

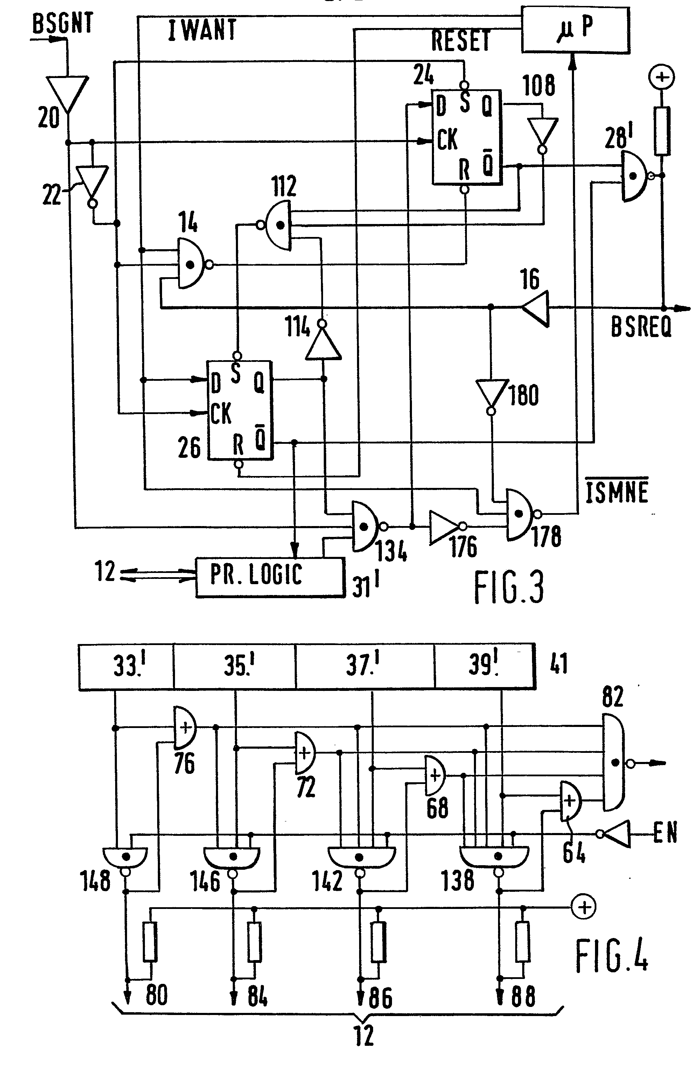

The priority logic unit 31 can be explained with reference to Figure 4, though it should be noted that Figure 4 shows the priority logic unit 31' for the circuit of Figure 2, and the unit 31 is slightly different, as will be explained. Considering first the unit 31' as shown in Figure 4, the priority level is set by a 4-bit number in a 4-bit register 41. The highest order priority bit is in register unit 33', and is 1 for high priority, 0 for low priority. This bit is fed to a NAND gate 148, which is also fed with the enable signal EN from flip-flop 26 via an inverter. Gate 148 drives a line 80 which is one of 4 lines 80,84, 86, and 88 forming the priority contention bus 12. These 4 lines are all tied to a positive voltage through respective resistors, so that they are all at 1 unless they are driven to 0 by a drive signal applied to them.

If register unit 33' stores a 1 (high priority), then when the enable signal EN goes to 0, NAND gate 148 will have 1's at both inputs and drive its output (line 80) to 0. The 1 from register unit 33' will pass through OR gate 76 to a NAND gate 82, indicating high priority for the high order bit of the 4 priority bits. If register unit 33' stores a 0, this disables gate 148 which allows the line 80 to float. If no other peripheral unit is claiming priority with a 1 as its high order priority bit, then line 80 will be floated by all units and will be at 1. Hence gate 76 will again pass a 1, indicating high priority (compared to the other units) for the top bit. However, if some other unit with a 1 as its high priority bit is contending for priority, that unit will force line 80 to 0, and gate 76 will produce a 0, indicating that the unit shown has lost the priority contest.

For each of the remaining 3 priority bits, a similar priority contest occurs. Each of the OR gates 76, 72, and 68 feeds the NAND gates 146, 142, and 138 of the lower order priority bits, to prevent a unit which has lost a priority contest on a higher order bit from trying to contest priority for lower order bits. Hence any priority contest for lower order bits is conducted only between units which have equal priority on higher order bits.

Since the units all have different priorities, one unit will win the priority contest, and have all 1's at the inputs to NAND gate 82. The output of NAND gate 82 will therefore go to 0 to indicate the winning of the priority contest.

This circuit has been slightly simplified, by the omission of inverters between the NAND gates 148, etc., and the OR gates 76, etc., the use of OR instead of NOR gates for gates 76, etc., and the feeding of the gates 76, etc., from the direct instead of the inverted outputs of the register 41. Also, the register 41 is coupled to a bus (not shown) whereby is priority can be read out to and reset by the CPU 2.

For the priority logic unit 31, the circuit shown in Figure 4 is slightly modified. In place of the register 41, there are 4 units 33, etc., each as shown in Figure 5, comprising a manually settable switch and driven by the enable signal EN as shown. Also, the enable signal is not fed to the NAND gates 148, etc., and gate 148 itself therefore becomes a simple inverter.

For the most part, the circuit of Figure 2 is adequate, but it has certain potential weaknesses. For example, at the beginning of the cycle, if it is assumed that the IWANT signal is active high, and

BSREQ signal or BSGNT signal on the associated busses, the gate 14 will provide an active 0 signal which tends to reset the flip-flop 24 and set the flip-flop 26. If during that interval another subordinate controller asserts a bus request signal, that bus request signal would deactivate gate 14. It is possible that the timing of the deactivation of the gate 14 would be such that the emitted control pulse would have insufficient energy to both reset the flip-flop 24 and set the flip-flop 26. In such a case, there would be the confusing states of having both of the flip-flops either set or in reset, conditions which are meaningless.

Another potential weakness that appears in the circuit in Figure 2 occurs when the request for access to the bus is set up in the so-called burst mode. Under ordinary circumstances, when a local subordinate controller has gained access to the bus it will transmit a single byte or word then relinquish control of the bus. In the burst mode, the subordinate controller requires access to the bus to transmit a whole block of data without interruption. In such an arrangement, the IWANT signal goes to 0 after each byte or word and is quickly reasserted to 1. When the IWANT signal goes to 0, the flip-flop 24 is set. About the same time, the bus grant signal goes to 0 and the IWANT signal is reasserted at 1. The reassertion of the IWANT signal causes the output of gate 14 to go to 0, tending to reset flip-flop 24, and set flip-flop 26. A potential conflict occurs, however. When the BSGNT signal went to 0 the output of the inverter 22, applied to the clock input terminal of flip-flop 26, would tend to restore flip-flop 26 to the reset state, in conflict with the signal from the gate 14 which would tend to set flip-flop 26. Whichever action occurs will be the result of an unpredictable race between the two signals.

Figure 3 shows a circuit arrangement which overcomes the foregoing potential weaknesses of the access contention logic circuitry of Figure 2. Corresponding elements have the same references, with a prime for a modified element. In the circuit shown in Figure 2, when the apparatus was set for burst mode operation, there was a potential for a confusing state of activation of the second flip-flop 26. In the circuit shown in Figure 3 the potential for that ambiguity is eliminated by feeding the D input of the flip-flop 26 with the IWANT signal. When the IWANT signal is at 0, the occurrence of a clock pulse at the clock input of flip-flop 26 will cause that flip-flop to be reset. On the other hand, when the IWANT signal is present, i.e., at 1, the occurrence of the clock pulse will cause the flip-flop to be set and he confusion is eliminated.

The other potential weakness of the circuit of Figure 2 was that resulting from a short pulse out of the gate 14 as a result of the IWANT signal being closely followed by a bus request signal on the bus 30 from one of the other access contention logic circuits in the system, wherein that pulse had insufficient energy to trigger both flip-flop 24 and flip-flop 26. In the circuit of Figure 3 that potential weakness is eliminated. First, to assure that flip-flop 26 is in a known initial condition, instead of allowing its reset input to float as in Figure 2, in Figure 3 its reset input is fed with an affirmative reset signal RESET, issued by the onboard microprocessor, when the microprocessor has completed its transmission. In the assertion of the bus access request, the onboard microprocessor again issues an IWANT signal which is applied to one input terminal of the gate 14. Again, it is assumed that there is no prevailing bus request signal or bus grant signal. Under those conditions all three inputs of gate 14 are at 1, producing a 0 at its output. That signal applied to the reset input of flip-flop 100 resets that flip-flop, producing a 1 at its $\overline{Q}$ output and a 0 at its Q output. Even if, during that interval, signal BSREQ had gone to 0 from one of the other contending access logic circuits, producing a short output pulse from the gate 14, that pulse would have sufficient energy to effect the resetting of flip-flop 24. With the Q output of flip-flop 24 inverted by the inverter 108 applied to gate 112 and the $\overline{Q}$ output of flip-flop 24 applied directly to gate 112, and the Q output of the previously reset flip-flop 26 also applied to via inverter 114 to gate 112, a 0 is applied to the SET input of flip-flop 26 to set it. As soon as flip-flop 26 is set, its Q output is inverted, removing the 0 signal from its SET input. In this manner, the pulse from the gate 14 is of adequate energy to effect the resetting of the flip-flop 24. The inverter 108 and the gate 112 comprises a delay circuit which produces a resultant pulse from the resetting of flip-flop 24 to effect an affirmative setting of flip-flop 102. This eliminates the potential for ambiguity in the event of a short pulse from the gate 14.

It will also be seen that the gates 90 and 92 of the circuit of Figure 2 have been replaced by gates 134, 176, 178, and 180 in the circuit of Figure 3. These gates perform much the same function in generating the signal $\overline{ISMNE}$, but in the circuit of Figure 3, the IWANT signal and the state of flip-flop 26 are both fed into the gating sequence to ensure that the signal $\overline{ISMNE}$ can only be generate provided the IWANT signal and the flip-flop 26 are in the proper states.

0051425

- 11 -

CLAIMS

1. A bus access and priority resolving circuit (10) for a computer system unit (6) which may contend with other such units for access to a bus (8) controlled by a CPU (2), comprising:
a bus request flip-flop (24) which generates a bus request signal (BSREQ) on the bus when reset;
gating circuitry (14) responsive to a combination of conditions, including a signal (IWANT) indicating that the unit wants to access the bus and the absence of a bus request, to reset the bus request flip-flop;
priority logic (31') which resolves priority contentions with other units;
an assert priority flip-flop (26) which is set with the resetting of the bus request flip-flop to enable the priority logic; and
logic circuitry (134,176,178) responsive to the priority logic and a bus grant signal (BSGNT) from the CPU to generate a signal ($\overline{\text{ISMNE}}$) indicating that the unit is granted access to the bus,
characterized by further gating means (112) responsive to the resetting of the bus request flip-flop to set the assert priority flip-flop.

2. A circuit according to Claim 1, characterized in that the further gating circuitry (112) is fed by the complemented output ($\overline{Q}$) of the bus request flip-flop (24) and via an inverter (108) with the direct output (Q) of that flip-flop.

3. A circuit according to either previous claim characterized in that the further gating circuitry (112) is fed by the assert priority flip-flop (26).

4. A circuit according to any previous claim characterized in that the assert priority flip-flop (26) has its reset input (R) fed from the computer system unit to ensure its resetting when the bus access ends.

1/2

0051425

FIG.2

FIG.5

FIG.1

FIG.3

FIG.4

# EUROPEAN SEARCH REPORT

**European Patent Office**

## DOCUMENTS CONSIDERED TO BE RELEVANT

| Category | Citation of document with indication, where appropriate, of relevant passages | Relevant to claim |
|---|---|---|
| X | US - A - 4 096 569 (HONEYWELL)<br><br>* column 6, line 49 to column 7, line 12; column 8, line 67 to column 9, line 63; column 10, line 54 to column 11, line 2; figure 3 *<br><br>--------- | 1-4 |

**CLASSIFICATION OF THE APPLICATION (Int. Cl. 3)**

G 06 F 13/00
3/04

**TECHNICAL FIELDS SEARCHED (Int.Cl. 3)**

G 06 F 3/04

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 19-02-1982 | DAVIES |

EPO Form 1503.1  06.78